# EUROPÄISCHE PATENTSCHRIFT

(11) **EP 2 922 884 B1**
(45) Veröffentlichungstag und Bekanntmachung des Hinweises auf die Patenterteilung: **28.11.2018**
(21) Anmeldenummer: 13759727.4
(22) Anmeldetag: 06.09.2013
(51) Int. Cl.: C08F 293/00, C08F 212/14, C08F 236/02, C11D 3/37

(54) **AMPHIPHILE BLOCKCOPOLYMERE UND MASCHINELLE GESCHIRRSPÜLMITTEL ENTHALTEND DIESE**
AMPHIPHILIC BLOCK COPOLYMERS AND MACHINE DISHWASHING DETERGENTS CONTAINING THESE
COPOLYMÈRES EN MASSE AMPHIPHILES ET DÉTERGENTS DE LAVE-VAISSELLE CONTENANT LESDITS COPOLYMÈRES

(30) Priorität: 23.11.2012 FR 1261195
(43) Veröffentlichungstag der Anmeldung: 30.09.2015
(73) Patentinhaber: Henkel AG & Co. KGaA, 40589 Düsseldorf (DE)
(72) Erfinder: LUNEAU, Benoit, 40885 Ratingen (DE); KROPF, Christian, 40724 Hilden (DE); JOB, Mareile, 51375 Leverkusen (DE); MUßMANN, Nina, 47877 Willich (DE); EITING, Thomas, 40589 Düsseldorf (DE); BENDA, Konstantin, 40822 Mettmann (DE); BASTIGKEIT, Thorsten, 42279 Wuppertal (DE); TRAN, Quang Ngoc, F-13013 Marseille (FR); PHAN, Trang, F-13009 Marseille (FR); GIGMES, Didier, F-13190 Allauch (FR); BERTIN, Denis, F-13013 Marseille (FR)
(86) Internationale Anmeldenummer: PCT/EP2013/068419
(87) Internationale Veröffentlichungsnummer: WO 2014/079598

(56) Entgegenhaltungen:
- EP-A1- 0 916 720
- EP-A2- 0 768 370
- DE-A1-102010 039 815
- US-A1- 2001 044 498
- US-A1- 2005 129 647

## Beschreibung

Die vorliegende Erfindung betrifft amphiphile Blockcopolymere, ihren Einsatz in Wasch- oder Reinigungsmitteln, insbesondere in maschinellen Geschirrspülmitteln sowie ein maschinelles Geschirrspülverfahren.

Wenn im Zuge des maschinellen Geschirrspülens an Kunststoff Verfärbungen auftreten, kommt das meist von sehr farbintensiven Lebensmitteln wie z.B. Curry, Paprika, Tomaten, Blaukraut, Ketchup, Karotten usw., welche in Form von Speiseresten in die Geschirrspülmaschine eingebracht werden. Verfärbungen des Kunststoffes, wie z.B. von Kunststoffgeschirr, führen beim Verbraucher zu Unzufriedenheit, denn das betreffende Kunststoffgeschirr bleibt zwar auf rein funktioneller Ebene unbeeinträchtigt, erscheint jedoch vielen Verbrauchern als optisch entwertet, nicht genügend gereinigt oder stört zumindest das ästhetische Empfinden.

Verbindungen zur Verminderung der Verfärbung von Kunststoffen werden beispielsweise in der Anmeldung WO 02/064720 beschrieben. Hier wird offenbart, dass Copolymere basierend auf hydrophob modifizierten Polycarboxylaten die Verfärbung von Kunststoffen unterdrücken.

Die internationale Patentanmeldung WO 03/095602 offenbart ein Verfahren zum Entfernen von farbigen Anschmutzungen auf Kunststoff durch eine Komponente mit einer Dichte von 0,6 bis 1 g/l, insbesondere Paraffinöl und ähnliche Kohlenwasserstoffe, Olivenöl und Sojaöl.

In der WO 2010/078979 wird der Einsatz von porösen Polyamidpartikeln sowie von synthetischen Schichtsilikaten zur Verminderung der Verfärbung von Kunststoffgeschirr offenbart.

Gemäß der deutschen Patentanmeldung DE 10104470 werden Copolymere zur Verfärbungsinhibierung von Kunststoffgegenständen in maschinellen Geschirrspülmitteln eingesetzt, welche mindestens 2 monoethylenisch ungesättigte Monomere aufweisen, von denen eines vorzugsweise ein α-Olefin mit 10 oder mehr Kohlenstoffatomen darstellt.

Die Aufgabe der vorliegenden Erfindung bestand darin, weitere Verbindungen zur Verfügung zu stellen, die das Auftreten von Verfärbungen an Kunststoffen im Zuge des maschinellen Geschirrspülens als Folge von farbigen Speiseresten zumindest vermindern.

Überraschenderweise wurde gefunden, dass bestimmte amphiphile Blockcopolymere, welche Diene als hydrophobe Monomere aufweisen, diese Aufgabe lösen.

Gegenstand der Erfindung sind daher amphiphile Blockcopolymere vom Typ -Aₙ-Bₘ-, wobei A den hydrophilen Monomerbaustein des hydrophilen Blocks An und B den hydrophoben Monomerbaustein des hydrophoben Blocks Bm darstellt, dadurch gekennzeichnet, dass als hydrophiles Monomer Styrolsulfonat, Acrylsäure oder Derivate davon, (Meth)Acrylamid, beta-Carboxyethylacrylat, Vinylsulfonat, Sulfoethylmethyacrylat, Sulfopropylmethacrylat, Acrylamido-2-methylpropansulfonsäure, 3-Allyloxy-2-hydroxy-1-propansulfonsäure oder Mischungen aus diesen, insbesondere Styrolsulfonat enthält und als Monomer für den hydrophoben Monomerbaustein B ein Dien dient, insbesondere ein Dien oder mehrere Diene ausgewählt aus der Gruppe 1,3-Butadien, 1,3-Pentadien sowie Isopren.

In einer bevorzugten Ausführungsform enthalten die amphiphilen Blockcopolymere als Monomer für den hydrophoben Block Bm ein Dien oder mehrere Diene ausgewählt aus der Gruppe der Diene mit 4 bis 10 Kohlenstoffatomen, insbesondere 4 bis 8 Kohlenstoffatomen pro Monomer. Von besonderem Vorteil sind amphiphile Blockcopolymere, welche als Monomer für den hydrophoben Block Bm ein Dien oder mehrere Diene ausgewählt aus der Gruppe 1,3-Butadien, 1,3-Pentadien sowie Isopren enthalten.

Dementsprechend weisen bevorzugte hydrophobe Blöcke Bₘ eine oder mehrere der folgenden Strukturen auf:

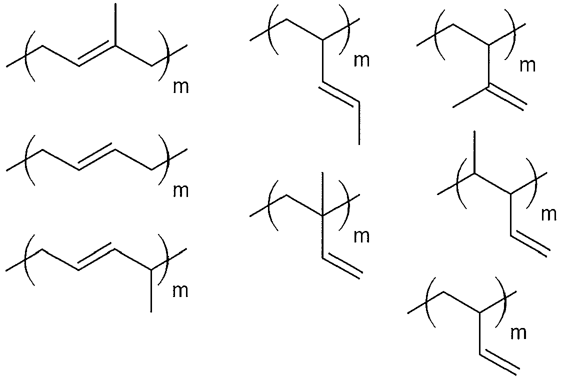

Der hydrophile Monomerbaustein A hat einen Anteil an dem amphiphilen Blockcopolymer von vorzugsweise 50 bis 99 Mol-%, insbesondere von 70 bis 90 Mol-% und kann aus einer Vielzahl aus dem Stand der Technik bekannter hydrophiler Monomere gebildet werden. Erfindungsgemäß enthält das amphiphile Blockcopolymer als hydrophiles Monomer Styrolsulfonat, Acrylsäure und Derivate davon, beispielsweise Methyacrylsäure, Hydroxyethyl(meth)acrylsäure oder Salze davon, (Meth)Acrylamid, beta-Carboxyethylacrylat wie Sipomer® B CEA, Vinylsulfonat, Sulfoethylmethacrylat, Sulfopropylmethacrylat, Acrylamido-2-methylpropansulfonsäure, 3-Allyloxy-2-hydroxy-1-propansulfonsäure, beispielsweise Sipomer® COPS1, oder Mischungen daraus, insbesondere Styrolsulfonat.

Bevorzugte Molekulargewichte des erfindungsgemäßen amphiphilen Blockcopolymers liegen bei 1000 g/mol bis 80000 g/mol und vorzugsweise bei 2000 bis 40000 g/mol.

Ein weiterer Gegenstand der Erfindung ist die Verwendung von amphiphilen Blockcopolymere vom Typ -An-Bm- , wobei A den hydrophilen Monomerbaustein des hydrophilen Blocks An und B den hydrophoben Monomerbaustein des hydrophoben Blocks Bm darstellt, wobei als Monomer für den hydrophoben Monomerbaustein B ein Dien dient, in Wasch- oder Reinigungsmitteln, insbesondere in maschinellen Geschirrspülmitteln. Vorzugsweise werden die erfindungsgemäßen amphiphilen Blockcopolymere in maschinellen Geschirrspülmitteln zur Verminderung von Verfärbungen auf Kunststoffgeschirr, insbesondere Plastik, verwendet. Dabei ist in der Regel unter der Verminderung der Verfärbung zu verstehen, dass die Übertragung von Farbstoffen, resultierend aus farbigen Lebensmittelrückständen, auf Kunststoffgeschirr bei dessen Reinigung in einer automatischen Geschirrspülmaschine zumindest reduziert, im besten Falle sogar ganz unterdrückt wird. Darunter wird allerdings auch verstanden, dass eine Veränderung des Farbeindrucks von Kunststoffgeschirr bei dessen Reinigung in einer automatischen Geschirrspülmaschine zumindest reduziert und im besten Fall ganz unterdrückt wird. In einer bevorzugten Ausführungsform der Erfindung kommen die amphiphilen Blockcopolymere in Mengen von 0,1 bis 25 Gew.-% in den Wasch- oder Reinigungsmitteln zum Einsatz. Insbesondere bei der Verwendung in maschinellen Geschirrspülmitteln sind Mengen von 0,1 bis 10 Gew.-% unter Bevorzugung von 1 bis 8 Gew.-% und unter ganz besonderer Bevorzugung von 2 bis 6 Gew.-% vorteilhaft.

Ein weiterer Gegenstand der Erfindung ist ein maschinelles Geschirrspülmittel, enthaltend , amphiphile Blockcopolymere vom Typ -An-Bm- , wobei A den hydrophilen Monomerbaustein des hydrophilen Blocks An und B den hydrophoben Monomerbaustein des hydrophoben Blocks Bm darstellt, wobei als Monomer für den hydrophoben Monomerbaustein B ein Dien dient, insbesondere in Mengen von 0,1 bis 10 Gew.-% unter Bevorzugung von 1 bis 8 Gew.-% und unter ganz besonderer Bevorzugung von 2 bis 6 Gew.-%.

Ein weiterer Gegenstand der vorliegenden Erfindung ist ein maschinelles Geschirrspülverfahren zur Verminderung der Verfärbung von Kunststoffgeschirr, bei dem ein amphiphilen Blockcopolymer vom Typ -Aₙ-Bₘ-, wobei A den hydrophilen Monomerbaustein des hydrophilen Blocks An und B den hydrophoben Monomerbaustein des hydrophoben Blocks Bm darstellt, wobei als Monomer für den hydrophoben Monomerbaustein B ein Dien dient, oder ein erfindungsgemäßes maschinelles Geschirrspülmittel eingesetzt wird.

Die Veränderung des Farbeindrucks von Kunststoffgeschirr bei dessen Reinigung in einer automatischen Geschirrspülmaschine kann vermieden bzw. zumindest reduziert werden. Die Übertragung von Farbstoffen, resultierend aus farbigen Lebensmittelrückständen, auf Kunststoffgeschirr bei dessen Reinigung in einer automatischen Geschirrspülmaschine kann unterdrückt bzw. zumindest reduziert werden. Besonders wirksam kann die Übertragung der folgenden Farbstoffe inhibiert bzw. zumindest reduziert werden:
- orangerote Carotinoide wie z.B. Lycopin oder beta-Carotin, z.B. aus Tomaten, Ketchup oder Möhren,
- gelbe Curcumafarbstoffe, wie z.B. Curcumin, z.B. aus Curry und Senf.

Gegebenenfalls kann weiterhin auch die Übertragung der folgenden Farbstoffe inhibiert werden:
- rote bis blaue Anthocyanfarbstoffe, wie z.B. Cyanidin, z.B. aus Kirschen oder Heidelbeeren,
- rotes Betanidin, z.B. aus der roten Beete,
- braune Gerbstoffe, z.B. aus Tee, Obst, Rotwein
- tiefbraune Huminsäure, z.B. aus Kaffee, Tee, Kakao,
- grünes Chlorophyll, z.B. aus grünen Kräutern.

Insbesondere weiße und hellfarbige Kunststoffmaterialien profitieren von der Erfindung. Die Kunststoffmaterialien bestehen in einer bevorzugten Ausführungsform aus Polyethylen oder Polypropylen.

Zusätzlich können gewünschtenfalls weitere, bekannte Farbübertragungsinhibitoren, vorzugsweise in Mengen von 0,01 Gew.-% bis 5 Gew.-%, insbesondere 0,1 Gew.-% bis 1 Gew.-%, verwendet werden. In einer bevorzugten Ausgestaltung der Erfindung gehören hierzu ein Polymer aus Vinylpyrrolidon, Vinylimidazol, Vinylpyridin-N-Oxid oder ein Copolymer aus diesen einsetzbar. Brauchbar sind sowohl Polyvinylpyrrolidone mit Molgewichten von 15 000 bis 50 000 wie auch Polyvinylpyrrolidone mit Molgewichten über 1 000 000, insbesondere von 1 500 000 bis 4 000 000, N-Vinylimidazol/N-Vinylpyrrolidon-Copolymere, Polyvinyloxazolidone, Polyamin-N-Oxid-Polymere, Polyvinylalkohole und Copolymere auf Basis von Acrylamidoalkenylsulfonsäuren.

Polyvinylpyrrolidon weist zum Einsatz in erfindungsgemäßen Mitteln vorzugsweise eine durchschnittliche Molmasse im Bereich von 10 000 bis 60 000, insbesondere im Bereich von 25 000 bis 50 000 auf. Unter den Copolymeren sind solche aus Vinylpyrrolidon und Vinylimidazol im Molverhältnis 5:1 bis 1:1 mit einer durchschnittlichen Molmasse im Bereich von 5 000 bis 50 000, insbesondere 10 000 bis 20 000 bevorzugt.

Als weitere bekannte Farbübertragungsinhibitoren können poröse Polyamidpartikel und/oder synthetische Schichtsilikate und/oder Glycerinester und/oder Thiosulfat und/oder hydrophob modifizierte Polysaccharide und/oder anionische Tenside wie Alkylbenzolsulfonat und/oder Alkansulfonate eingesetzt werden.

Die erfindungsgemäßen maschinellen Geschirrspülmittel können fester oder flüssiger Natur sein und insbesondere als pulverförmige Feststoffe, in nachverdichteter Teilchenform, als homogene Lösungen oder Suspensionen vorliegen. In einer weiteren bevorzugten Ausführungsform der Erfindung liegt das maschinelle Geschirrspülmittel in einer vorportionierten Form vor. In einer weiteren bevorzugten Ausführungsform der Erfindung weist das maschinelle Geschirrspülmittel mehrere räumlich voneinander getrennte Zusammensetzungen auf, wodurch es möglich ist, nicht kompatible Inhaltsstoffe voneinander zu trennen, oder Zusammensetzungen in Kombination anzubieten, welche zu unterschiedlichen Zeitpunkten in der Geschirrspülmaschine zum Einsatz kommen. Dies ist besonders vorteilhaft, wenn die maschinellen Geschirrspülmittel in vorportionierter Form vorliegen. Dabei liegt mindestens eine der Zusammensetzungen fest und/oder mindestens eine der Zusammensetzungen flüssig vor, wobei die hydrophob modifizierten Polysaccharide in mindestens einer der Zusammensetzungen enthalten sind, aber auch in mehreren Zusammensetzungen vorliegen können.

Vorzugsweise kommt in den maschinellen Geschirrspülmitteln mindestens ein weiterer Bestandteil, kommen insbesondere mindestens zwei weitere Bestandteile, ausgewählt aus der Gruppe bestehend aus Gerüststoffen, weiteren Tensiden, Polymeren, Bleichmitteln, Bleichaktivatoren und Bleichkatalysatoren, insbesondere auf Mangan- oder Kobalt-Basis, Enzymen, Korrosionsinhibitoren und Glaskorrosionsinhibitoren, Desintegrationshilfsmitteln, Duftstoffen und Parfümträgern in Betracht..

Mit Vorteil können Gerüststoffe eingesetzt werden. Zu den Gerüststoffen zählen insbesondere die Zeolithe, Silikate, Carbonate, organische Cobuilder und - wo keine ökologischen Vorurteile gegen ihren Einsatz bestehen - auch die Phosphate.

Mit Vorzug können kristalline schichtförmige Silikate der allgemeinen Formel NaMSiₓO₂ₓ₊₁·yH₂O eingesetzt werden, worin M Natrium oder Wasserstoff darstellt, x eine Zahl von 1,9 bis 22, vorzugsweise von 1,9 bis 4, wobei besonders bevorzugte Werte für x 2, 3 oder 4 sind, und y für eine Zahl von 0 bis 33, vorzugsweise von 0 bis 20 steht. Die kristallinen schichtförmigen Silikate der Formel NaMSiₓO₂ₓ₊₁·yH₂O werden beispielsweise von der Firma Clariant GmbH (Deutschland) unter dem Handelsnamen Na-SKS vertrieben. Beispiele für diese Silikate sind Na-SKS-1 (Na₂Si₂₂O₄₅·xH₂O, Kenyait), Na-SKS-2 (Na₂Si₁₄O₂₉·xH₂O, Magadiit), Na-SKS-3 (Na₂Si₈O₁₇·x H₂O) oder Na-SKS-4 (Na₂Si₄O₉·xH₂O, Makatit). Für die Zwecke der vorliegenden Erfindung besonders geeignet sind kristalline Schichtsilikate der Formel NaMSiₓO₂ₓ₊₁·yH₂O, in denen x für 2 steht. Insbesondere sind sowohl β- als auch δ-Natriumdisitikate Na₂Si₂O₅·yH₂O sowie weiterhin vor allem Na-SKS-5 (α-Na₂Si₂O₅), Na-SKS-7 (β-Na₂Si₂O₅, Natrosilit), Na-SKS-9 (NaHSi₂O₅·H₂O), Na-SKS-10 (NaHSi₂O₅·3H₂O, Kanemit), Na-SKS-11 (t-Na₂Si₂O₅) und Na-SKS-13 (NaHSi₂O₅), insbesondere aber Na-SKS-6 (δ-Na₂Si₂O₅) bevorzugt.

Maschinelle Geschirrspülmittel enthalten vorzugsweise einen Gewichtsanteil des kristallinen schichtförmigen Silikats der Formel NaMSiₓO₂ₓ₊₁·yH₂O von 0,1 bis 20 Gew.-%, bevorzugt von 0,2 bis 15 Gew.-% und insbesondere von 0,4 bis 10 Gew.-%, jeweils bezogen auf das Gesamtgewicht dieser Mittel.

Einsetzbar sind auch amorphe Natriumsilikate mit einem Modul Na₂O : SiO₂ von 1:2 bis 1:3,3, vorzugsweise von 1:2 bis 1:2,8 und insbesondere von 1:2 bis 1:2,6, welche vorzugsweise löseverzögert sind und Sekundärwascheigenschaften aufweisen. Die Löseverzögerung gegenüber herkömmlichen amorphen Natriumsilikaten kann dabei auf verschiedene Weise, beispielsweise durch Oberflächenbehandlung, Compoundierung, Kompaktierung/Verdichtung oder durch Übertrocknung hervorgerufen worden sein. Im Rahmen dieser Erfindung wird unter dem Begriff "amorph" verstanden, dass die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen, hervorrufen.

Im Rahmen der vorliegenden Erfindung ist es bevorzugt, dass diese(s) Silikat(e), vorzugsweise Alkalisilikate, besonders bevorzugt kristalline oder amorphe Alkalidisilikate, in den Mitteln in Mengen von 3 bis 60 Gew.-%, vorzugsweise von 8 bis 50 Gew.-% und insbesondere von 20 bis 40 Gew.-%, jeweils bezogen auf das Gewicht des maschinellen Geschirrspülmittels, enthalten sind.

Selbstverständlich ist auch ein Einsatz der allgemein bekannten Phosphate als Buildersubstanzen möglich, sofern ein derartiger Einsatz nicht aus ökologischen Gründen vermieden werden sollte. Unter der Vielzahl der kommerziell erhältlichen Phosphate haben die Alkalimetallphosphate unter besonderer Bevorzugung von Pentanatrium- bzw. Pentakaliumtriphosphat (Natrium- bzw. Kaliumtripolyphosphat) in der Wasch- oder Reinigungsmittel-Industrie die größte Bedeutung.

Alkalimetallphosphate ist dabei die summarische Bezeichnung für die Alkalimetall- (insbesondere Natrium- und Kalium-) Salze der verschiedenen Phosphorsäuren, bei denen man Metaphosphorsäuren (HPO₃)ₙ und Orthophosphorsäure H₃PO₄ neben höhermolekularen Vertretern unterscheiden kann. Die Phosphate vereinen dabei mehrere Vorteile in sich: Sie wirken als Alkaliträger, verhindern Kalkbeläge auf Maschinenteilen bzw. Kalkinkrustationen in Geweben und tragen überdies zur Reinigungsleistung bei.

Technisch besonders wichtige Phosphate sind das Pentanatriumtriphosphat, Na₅P₃O₁₀ (Natriumtripolyphosphat) sowie das entsprechende Kaliumsalz Pentakaliumtriphosphat, K₅P₃O₁₀ (Kaliumtripolyphosphat). Erfindungsgemäß bevorzugt einsetzbar sind die Natriumkaliumtripolyphosphate.

Werden im Rahmen der vorliegenden Anmeldung Phosphate als wasch- oder reinigungsaktive Substanzen im maschinellen Geschirrspülmittel eingesetzt, so sind diese, besonders bevorzugt Pentanatrium- bzw. Pentakaliumtriphosphat (Natrium- bzw. Kaliumtripolyphosphat), in der Regel in Mengen von 5 bis 80 Gew.-%, vorzugsweise von 15 bis 75 Gew.-% und insbesondere von 20 bis 70 Gew.-%, jeweils bezogen auf das Gewicht des maschinellen Geschirrspülmittels.

Weitere Gerüststoffe sind die Alkaliträger. Als Alkaliträger gelten beispielsweise Alkalimetallhydroxide, Alkalimetallcarbonate, Alkalimetallhydrogencarbonate, Alkalimetallsesquicarbonate, die genannten Alkalisilikate, Alkalimetasilikate, und Mischungen der vorgenannten Stoffe, wobei im Sinne dieser Erfindung bevorzugt die Alkalicarbonate, insbesondere Natriumcarbonat, Natriumhydrogencarbonat oder Natriumsesquicarbonat eingesetzt werden können. Besonders bevorzugt ist ein Buildersystem enthaltend eine Mischung aus Tripolyphosphat und Natriumcarbonat. Ebenfalls besonders bevorzugt ist ein Buildersystem enthaltend eine Mischung aus Tripolyphosphat und Natriumcarbonat und Natriumdisilikat. Aufgrund ihrer im Vergleich mit anderen Buildersubstanzen geringen chemischen Kompatibilität mit den übrigen Inhaltsstoffen von maschinellen Geschirrspülmitteln, werden die optionalen Alkalimetallhydroxide bevorzugt nur in geringen Mengen, vorzugsweise in Mengen unterhalb 10 Gew.-%, bevorzugt unterhalb 6 Gew.-%, besonders bevorzugt unterhalb 4 Gew.-% und insbesondere unterhalb 2 Gew.-%, jeweils bezogen auf das Gesamtgewicht des maschinellen Geschirrspülmittels, eingesetzt. Besonders bevorzugt werden Mittel, welche bezogen auf ihr Gesamtgewicht weniger als 0,5 Gew.-% und insbesondere keine Alkalimetallhydroxide enthalten.

Besonders bevorzugt ist der Einsatz von Carbonat(en) und/oder Hydrogencarbonat(en), vorzugsweise Alkalicarbonat(en), besonders bevorzugt Natriumcarbonat, in Mengen von 2 bis 50 Gew.-%, vorzugsweise von 5 bis 40 Gew.-% und insbesondere von 7,5 bis 30 Gew.-%, jeweils bezogen auf das Gewicht des maschinellen Geschirrspülmittels. Besonders bevorzugt werden Mittel, welche bezogen auf das Gewicht des maschinellen Geschirrspülmittels weniger als 20 Gew.-%, vorzugsweise weniger als 17 Gew.-%, bevorzugt weniger als 13 Gew.-% und insbesondere weniger als 9 Gew.-% Carbonat(e) und/oder Hydrogencarbonat(e), vorzugsweise Alkalicarbonat(e), besonders bevorzugt Natriumcarbonat enthalten.

Als organische Cobuilder sind insbesondere Polycarboxylate / Polycarbonsäuren, polymere Polycarboxylate, Asparaginsäure, Polyacetale, Dextrine, weitere organische Cobuilder sowie Phosphonate zu nennen. Diese Stoffklassen werden nachfolgend beschrieben.

Brauchbare organische Gerüstsubstanzen sind beispielsweise die in Form der freien Säure und/oder ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Nitrilotriessigsäure (NTA), sofern ein derartiger Einsatz aus ökologischen Gründen nicht zu beanstanden ist, sowie Mischungen aus diesen. Die freien Säuren besitzen neben ihrer Builderwirkung typischerweise auch die Eigenschaft einer Säuerungskomponente und dienen somit auch zur Einstellung eines niedrigeren und milderen pH-Wertes der maschinellen Geschirrspülmittel. Insbesondere sind hierbei Citronensäure, Bernsteinsäure, Glutarsäure, Adipinsäure, Gluconsäure und beliebige Mischungen aus diesen zu nennen.

Als besonders vorteilhaft für die Reinigungs- und Klarspülleistung erfindungsgemäßer Mittel hat sich der Einsatz von Citronensäure und/oder Citraten in diesen Mitteln erwiesen. Erfindungsgemäß bevorzugt werden daher maschinelle Geschirrspülmittel, dadurch gekennzeichnet, dass das maschinelle Geschirrspülmittel Citronensäure oder ein Salz der Citronensäure enthält und das der Gewichtsanteil der Citronensäure oder des Salzes der Citronensäure vorzugsweise mehr als 10 Gew.-%, bevorzugt mehr als 15 Gew.-% und insbesondere zwischen 20 und 40 Gew.-% beträgt.

Eine weitere bedeutende Klasse der phosphatfreien Gerüststoffe stellen Aminocarbonsäure und/oder ihre Salze dar. Besonders bevorzugte Vertreter dieser Klasse sind Methylglycindiessigsäure (MGDA) oder ihre Salze sowie Glutamindiessigsäure (GLDA) oder ihre Salze oder Ethylendiamindiessigsäure oder ihre Salze (EDDS). Der Gehalt an diesen Aminocarbonsäuren bzw. ihren Salzen kann beispielsweise zwischen 0,1 und 15 Gew.-% bevorzugt zwischen 0,5 und 10 Gew.-% und insbesondere zwischen 0,5 und 6 Gew.-% ausmachen. Aminocarbonsäuren und ihre Salze können zusammen mit den vorgenannten Gerüststoffen, insbesondere auch mit den phosphatfreien Gerüststoffen eingesetzt werden.

Als Gerüststoffe sind weiter polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70000 g/mol.

Geeignete Polymere sind insbesondere Polyacrylate, die bevorzugt eine Molekülmasse von 2000 bis 20000 g/mol aufweisen. Aufgrund ihrer überlegenen Löslichkeit können aus dieser Gruppe wiederum die kurzkettigen Polyacrylate, die Molmassen von 2000 bis 10000 g/mol, und besonders bevorzugt von 3000 bis 5000 g/mol, aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2000 bis 70000 g/mol, vorzugsweise 20000 bis 50000 g/mol und insbesondere 30000 bis 40000 g/mol.

Die (co-)polymeren Polycarboxylate können entweder als Pulver oder als wässrige Lösung eingesetzt werden. Der Gehalt der maschinellen Geschirrspülmittel an (co-)polymeren Polycarboxylaten beträgt vorzugsweise 0,5 bis 20 Gew.-% und insbesondere 3 bis 10 Gew.-%.

Zur Verbesserung der Wasserlöslichkeit können die Polymere auch Allylsulfonsäuren, wie beispielsweise Allyloxybenzolsulfonsäure und Methallylsulfonsäure, als Monomer enthalten.

Weitere bevorzugte Copolymere sind solche, die als Monomere Acrolein und Acrylsäure/Acrylsäuresalze bzw. Acrolein und Vinylacetat aufweisen.

Darüber hinaus können alle Verbindungen, die in der Lage sind, Komplexe mit Erdalkaliionen auszubilden, als Gerüststoffe eingesetzt werden.

Zwar werden in einer bevorzugten Ausführungsform keine mit Sulfonsäuregruppen modifizierten Cellulosederivate zur Verfärbungsinhibierung auf Kunststoffen verwendet, jedoch können Sulfonsäuregruppen-haltige Polymere als Enthärter in maschinellen Geschirrspülmitteln zum Einsatz kommen. Sulfonsäuregruppen-haltigen Polymere sind dem Fachmann aus der Literatur bekannt. Besonders bevorzugt als Sulfonsäuregruppen-haltige Polymere einsetzbar sind Copolymere aus ungesättigten Carbonsäuren, Sulfonsäuregruppen-haltigen Monomeren und gegebenenfalls weiteren ionogenen oder nichtionogenen Monomeren.

Bevorzugte copolymere Sulfopolymere enthalten neben Sulfonsäuregruppen-haltigem(n) Monomer(en) wenigstens ein Monomer aus der Gruppe der ungesättigten Carbonsäuren.

Als ungesättigte Carbonsäure(n) wird/werden mit besonderem Vorzug ungesättigte Carbonsäuren der Formel R¹(R²)C=C(R³)COOH eingesetzt, in der R¹ bis R³ unabhängig voneinander für-H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste wie vorstehend definiert oder für -COOH oder -COOR⁴ steht, wobei R⁴ ein gesättigter oder ungesättigter, geradkettiger oder verzweigter Kohlenwasserstoffrest mit 1 bis 12 Kohlenstoffatomen ist.

Besonders bevorzugte ungesättigte Carbonsäuren sind Acrylsäure, Methacrylsäure, Ethacrylsäure, α-Chloroacrylsäure, α-Cyanoacrylsäure, Crotonsäure, α-Phenyl-Acrytsäure, Maleinsäure, Maleinsäureanhydrid, Fumarsäure, Itaconsäure, Citraconsäure, Methylenmalonsäure, Sorbinsäure, Zimtsäure oder deren Mischungen.

Bei den Sulfonsäuregruppen-haltigen Monomeren sind solche der Formel

R⁵(R⁶)C=C(R⁷)-X-SO₃H

bevorzugt, in der R⁵ bis R⁷ unabhängig voneinander für -H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste oder für -COOH oder -COOR⁴ steht, wobei R⁴ ein gesättigter oder ungesättigter, geradkettiger oder verzweigter Kohlenwasserstoffrest mit 1 bis 12 Kohlenstoffatomen ist, und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂-, -C(O)-NH-C(CH₃)₂-CH₂- und -C(O)-NH-CH(CH₃)-CH₂-.

Unter diesen Monomeren sind solche der Formeln

H₂C=CH-X-SO₃H

H₂C=C(CH₃)-X-SO₃H

HO₃S-X-(R⁶)C=C(R⁷)-X-SO₃H

Bevorzugt, in denen R⁶ und R⁷ unabhängig voneinander ausgewählt sind aus -H, -CH₃, -CH₂CH₃,-CH₂CH₂CH₃ und -CH(CH₃)₂ und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂-, -C(O)-NH-C(CH₃)₂-CH₂- und -C(O)-NH-CH(CH₃)-CH₂-.

Besonders bevorzugte Sulfonsäuregruppen-haltige Monomere sind dabei 1-Acrylamido-1-propansulfonsäure, 2-Acrylamido-2-propansulfonsäure, 2-Acrylamido-2-methyl-1-propansulfonsäure, 2-Methacrylamido-2-methyl-1-propansulfonsäure, 3-Methacrylamido-2-hydroxy-propansulfonsäure, Allylsulfonsäure, Methallylsulfonsäure, Allyloxybenzolsulfonsäure, Methallyloxybenzolsulfonsäure, 2-Hydroxy-3-(2-propenyloxy)propansulfonsäure, 2-Methyl-2-propen1-sulfonsäure, Styrolsulfonsäure, Vinylsulfonsäure, 3-Sulfopropylacrylat, 3-Sulfopropylmethacrylat, Sulfomethacrylamid, Sulfomethylmethacrylamid sowie Mischungen der genannten Säuren oder deren wasserlösliche Salze.

In den Polymeren können die Sulfonsäuregruppen ganz oder teilweise in neutralisierter Form vorliegen, d.h. dass das acide Wasserstoffatom der Sulfonsäuregruppe in einigen oder allen Sulfonsäuregruppen gegen Metallionen, vorzugsweise Alkalimetallionen und insbesondere gegen Natriumionen, ausgetauscht sein kann. Der Einsatz von teil- oder vollneutralisierten sulfonsäuregruppenhaltigen Copolymeren ist erfindungsgemäß bevorzugt.

Die Monomerenverteilung der erfindungsgemäß bevorzugt eingesetzten Copolymere beträgt bei Copolymeren, die nur Carbonsäuregruppen-haltige Monomere und Sulfonsäuregruppen-haltige Monomere enthalten, vorzugsweise jeweils 5 bis 95 Gew.-%, besonders bevorzugt beträgt der Anteil des Sulfonsäuregruppen-haltigen Monomers 50 bis 90 Gew.-% und der Anteil des Carbonsäuregruppen-haltigen Monomers 10 bis 50 Gew.-%, die Monomere sind hierbei vorzugsweise ausgewählt aus den zuvor genannten.

Die Molmasse der erfindungsgemäß bevorzugt eingesetzten Sulfo-Copolymere kann variiert werden, um die Eigenschaften der Polymere dem gewünschten Verwendungszweck anzupassen. Bevorzugte maschinelle Geschirrspülmittel sind dadurch gekennzeichnet, dass die Copolymere Molmassen von 2000 bis 200.000 gmol⁻¹, vorzugsweise von 4000 bis 25.000 gmol⁻¹ und insbesondere von 5000 bis 15.000 gmol⁻¹ aufweisen.

In einer weiteren bevorzugten Ausführungsform umfassen die Copolymere neben Carboxylgruppen-haltigem Monomer und Sulfonsäuregruppen-haltigem Monomer weiterhin wenigstens ein nichtionisches, vorzugsweise hydrophobes Monomer. Durch den Einsatz dieser hydrophob modifizierten Polymere konnte insbesondere die Klarspülleistung erfindungsgemäßer maschineller Geschirrspülmittel verbessert werden.

In einer weiteren bevorzugten Ausführungsform der Erfindung enthalten die Mittel mindestens ein anionisches Copolymer, umfassend
i) Carbonsäuregruppen-haltige Monomer(e)
ii) Sulfonsäuregruppen-haltige Monomer(e)
iii) nichtionische Monomer(e).

Als nichtionische Monomere werden vorzugsweise Monomere der allgemeinen Formel R¹(R²)C=C(R³)-X-R⁴ eingesetzt, in der R¹ bis R³ unabhängig voneinander für -H, -CH₃ oder -C₂H₅ steht, X für eine optional vorhandene Spacergruppe steht, die ausgewählt ist aus -CH₂-, -C(O)O- und -C(O)-NH-, und R⁴ für einen geradkettigen oder verzweigten gesättigten Alkylrest mit 2 bis 22 Kohlenstoffatomen oder für einen ungesättigten, vorzugsweise aromatischen Rest mit 6 bis 22 Kohlenstoffatomen steht.

Besonders bevorzugte nichtionische Monomere sind Buten, Isobuten, Penten, 3-Methylbuten, 2-Methylbuten, Cyclopenten, Hexen, Hexen-1, 2-Methlypenten-1, 3-Methlypenten-1, Cyclohexen, Methylcyclopenten, Cyclohepten, Methylcyclohexen, 2,4,4-Trimethylpenten-1, 2,4,4-Trimethylpenten-2, 2,3-Dimethylhexen-1, 2,4-Diemthylhexen-1, 2,5-Dimethlyhexen-1, 3,5-Dimethylhexen-1, 4,4-Dimehtylhexan-1, Ethylcyclohexyn, 1-Octen, α-Olefine mit 10 oder mehr Kohlenstoffatomen wie beispielsweise 1-Decen, 1-Dodecen, 1-Hexadecen, 1-Oktadecen und C22-α-Olefin, 2-Styrol, α-Methylstyrol, 3-Methylstyrol, 4-Propylstryol, 4-Cyclohexylstyrol, 4-Dodecylstyrol, 2-Ethyl-4-Benzylstyrol, 1-Vinylnaphthalin, 2,Vinylnaphthalin, Acrylsäuremethylester, Acrylsäureethylester, Acrylsäurepropylester, Acrylsäurebutylester, Acrylsäurepentylester, Acrylsäurehexylester, Methacrylsäuremethylester, N-(Methyl)acrylamid, Acrylsäure-2-Ethylhexylester, Methacrylsäure-2-Ethylhexylester, *N*-(2-Ethylhexyl)acrylamid, Acrylsäureoctylester, Methacrylsäureoctylester, *N*-(Octyl)acrylamid, Acrylsäurelaurylester, Methacrylsäurelaurylester, *N*-(Lauryl)acrylamid, Acrylsäurestearylester, Methacrylsäurestearylester, *N*-(Stearyl)acrylamid, Acrylsäurebehenylester, Methacrylsäurebehenylester und *N*-(Behenyl)acrylamid oder deren Mischungen.

Die erfindungsgemäßen Mittel können Tenside enthalten, wobei zur Gruppe der Tenside nichtionische, anionische, kationische und amphoteren Tenside gezählt werden.

Als nichtionische Tenside können alle dem Fachmann bekannten nichtionischen Tenside eingesetzt werden. Als nichtionische Tenside eignen sich beispielsweise Alkylglykoside der allgemeinen Formel RO(G)ₓ, in der R einem primären geradkettigen oder methylverzweigten, insbesondere in 2-Stellung methylverzweigten aliphatischen Rest mit 8 bis 22, vorzugsweise 12 bis 18 C-Atomen entspricht und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt einsetzbarer nichtionischer Tenside, die entweder als alleiniges nichtionisches Tensid oder in Kombination mit anderen nichtionischen Tensiden eingesetzt werden können, sind alkoxylierte, vorzugsweise ethoxylierte oder ethoxylierte und propoxylierte Fettsäurealkylester, vorzugsweise mit 1 bis 4 Kohlenstoffatomen in der Alkylkette.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind die als PHFA bekannten Polyhydroxyfettsäureamide.

Als bevorzugte Tenside können schwachschäumende nichtionische Tenside eingesetzt werden. Mit besonderem Vorzug enthalten die maschinellen Geschirrspülmittel nichtionische Tenside aus der Gruppe der alkoxylierten Alkohole. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 Mol EO pro Mol Alkohol bevorzugt. Zu den bevorzugten ethoxylierten Alkoholen gehören beispielsweise C₁₂₋₁₄-Alkohole mit 3 EO oder 4 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 5 EO. Die angegebenen Ethoxylierungsgrade stellen statistische Mittelwerte dar, die für ein spezielles Produkt einer ganzen oder einer gebrochenen Zahl entsprechen können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Insbesondere bevorzugt sind nichtionische Tenside, die einen Schmelzpunkt oberhalb Raumtemperatur aufweisen. Nichtionische(s) Tensid(e) mit einem Schmelzpunkt oberhalb von 20°C, vorzugsweise oberhalb von 25°C, besonders bevorzugt zwischen 25 und 60°C und insbesondere zwischen 26,6 und 43,3°C, ist/sind besonders bevorzugt.

Bevorzugt einzusetzende Tenside stammen aus den Gruppen der alkoxylierten Niotenside, insbesondere der ethoxylierten primären Alkohole und Mischungen dieser Tenside mit strukturell komplizierter aufgebauten Tensiden wie Polyoxypropylen/Polyoxyethylen/Polyoxypropylen ((PO/EO/PO)-Tenside). Solche (PO/EO/PO)-Niotenside zeichnen sich darüber hinaus durch gute Schaumkontrolle aus.

Als besonders bevorzugte Niotenside haben sich im Rahmen der vorliegenden Erfindung schwachschäumende Niotenside erwiesen, welche alternierende Ethylenoxid- und Alkylenoxideinheiten aufweisen. Unter diesen sind wiederum Tenside mit EO-AO-EO-AO-Blöcken bevorzugt, wobei jeweils eine bis zehn EO- bzw. AO-Gruppen aneinander gebunden sind, bevor ein Block aus den jeweils anderen Gruppen folgt. Hier sind nichionische Tenside der allgemeinen Formel 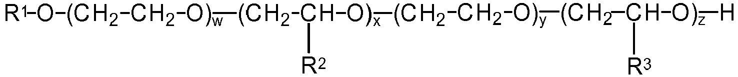 bevorzugt, in der R¹ für einen geradkettigen oder verzweigten, gesättigten oder ein- bzw. mehrfach ungesättigten C₆₋₂₄-Alkyl- oder -Alkenylrest steht; jede Gruppe R² bzw. R³ unabhängig voneinander ausgewählt ist aus -CH₃, -CH₂CH₃, -CH₂CH₂-CH₃, CH(CH₃)₂ und die Indizes w, x, y, z unabhängig voneinander für ganze Zahlen von 1 bis 6 stehen.

Somit sind insbesondere nichtionische Tenside bevorzugt, die einen C₉₋₁₅-Alkylrest mit 1 bis 4 Ethylenoxideinheiten, gefolgt von 1 bis 4 Propylenoxideinheiten, gefolgt von 1 bis 4 Ethylenoxideinheiten, gefolgt von1 bis 4 Propylenoxideinheiten aufweisen. Diese Tenside weisen in wässriger Lösung die erforderliche niedrige Viskosität auf und sind erfindungsgemäß mit besonderem Vorzug einsetzbar.

Tenside der allgemeinen Formel

R¹-CH(OH)CH₂O-(AO)_{w}-(A'O)ₓ-(A"O)_{y}-(A"'O)_{z}-R², in der

R¹ und R² unabhängig voneinander für einen geradkettigen oder verzweigten, gesättigten oder ein- bzw. mehrfach ungesättigten C₂₋₄₀-Alkyl- oder-Alkenylrest steht; A, A', A" und A'" unabhängig voneinander für einen Rest aus der Gruppe -CH₂CH₂, -CH₂CH₂-CH₂, -CH₂-CH(CH₃), -CH₂-CH₂-CH₂-CH₂, -CH₂-CH(CH₃)-CH₂-, -CH₂-CH(CH₂-CH₃) steht; und w, x, y und z für Werte zwischen 0,5 und 90 stehen, wobei x, y und/oder z auch 0 sein können, sind erfindungsgemäß besonders bevorzugt.

Ganz besonders bevorzugte nichtionische Tenside weisen in einer bevorzugten Ausführungsform die allgemeine Formel R¹O[CH₂CH(CH₃)O]ₓ[CH₂CH₂O]_{y}[CH₂CH(CH₃)O]_{z}CH₂CH(OH)R² auf, in der R¹ für einen linearen oder verzweigten aliphatischen Kohlenwasserstoffrest mit 4 bis 22 Kohlenstoffatomen oder Mischungen hieraus steht, R² einen linearen oder verzweigten Kohlenwasserstoffrest mit 2 bis 26 Kohlenstoffatomen, insbesondere 4 bis 20 Kohlenstoffatomen, oder Mischungen hieraus bezeichnet und x und z für Werte zwischen 0 und 40 und y für einen Wert von mindestens 15 steht.

Die angegebenen C-Kettenlängen sowie Ethoxylierungsgrade bzw. Alkoxylierungsgrade der vorgenannten Niotenside stellen statistische Mittelwerte dar, die für ein spezielles Produkt eine ganze oder eine gebrochene Zahl sein können. Aufgrund der Herstellverfahren bestehen Handelsprodukte der genannten Formeln zumeist nicht aus einem individuellen Vertreter, sondern aus Gemischen, wodurch sich sowohl für die C-Kettenlängen als auch für die Ethoxylierungsgrade bzw. Alkoxylierungsgrade Mittelwerte und daraus folgend gebrochene Zahlen ergeben können.

Ebenso können neben den bereits oben genannten anionischen Sulfonat-Tensiden noch weitere Aniontenside eingesetzt werden. Zu diesen zählen insbesondere die (Fett-)Alkylsulfate und (Fett-)Alkylethersulfate, aber auch alle anderen dem Fachmann bekannten anionischen Tenside. Der Gehalt der anionischen Tenside in den erfindungsgemäßen Mitteln beträgt insgesamt vorzugsweise maximal 10 Gew.-%.

An Stelle der genannten Tenside oder in Verbindung mit ihnen können auch kationische und/oder amphotere Tenside eingesetzt werden. Als kationische Aktivsubstanzen können beispielsweise kationische Verbindungen der nachfolgenden Formeln eingesetzt werden: 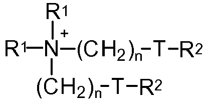 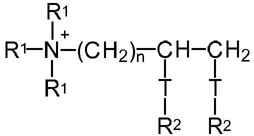 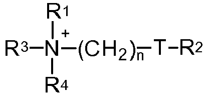 worin jede Gruppe R¹ unabhängig voneinander ausgewählt ist aus C₁₋₆-Alkyl-, -Alkenyl- oder -Hydroxyalkylgruppen; jede Gruppe R² unabhängig voneinander ausgewählt ist aus C₈₋₂₈-Alkyl- oder -Alkenylgruppen; R³ = R¹ oder (CH₂)ₙ-T-R²; R⁴ = R¹ oder R² oder (CH₂)ₙ-T-R²; T = -CH₂-, -O-CO- oder -CO-O- und n eine ganze Zahl von 0 bis 5 ist.

In maschinellen Geschirrspülmitteln, beträgt der Gehalt an kationischen und/oder amphoteren Tensiden vorzugsweise weniger als 6 Gew.-%, bevorzugt weniger als 4 Gew.-%, ganz besonders bevorzugt weniger als 2 Gew.-% und insbesondere weniger als 1 Gew.-%. Maschinelle Geschirrspülmittel, welche keine kationischen oder amphoteren Tenside enthalten, werden besonders bevorzugt.

Zur Gruppe der Polymere zählen insbesondere die wasch- oder reinigungsaktiven Polymere, beispielsweise die Klarspülpolymere und/oder als Enthärter wirksame Polymere. Generell sind in maschinellen Geschirrspülmittel neben nichtionischen Polymeren auch kationische, anionische und amphotere Polymere einsetzbar.

"Kationische Polymere" im Sinne der vorliegenden Erfindung sind Polymere, welche eine positive Ladung im Polymermolekül tragen. Diese kann beispielsweise durch in der Polymerkette vorliegende (Alkyl-)Ammoniumgruppierungen oder andere positiv geladene Gruppen realisiert werden. Besonders bevorzugte kationische Polymere stammen aus den Gruppen der quaternierten Cellulose-Derivate, der Polysiloxane mit quaternären Gruppen, der kationischen Guar-Derivate, der polymeren Dimethyldiallylammoniumsalze und deren Copolymere mit Estern und Amiden von Acrylsäure und Methacrylsäure, der Copolymere des Vinylpyrrolidons mit quaternierten Derivaten des Dialkylaminoacrylats und -methacrylats, der Vinylpyrrolidon-Methoimidazoliniumchlorid-Copolymere, der quaternierter Polyvinylalkohole oder der unter den INCI-Bezeichnungen Polyquaternium 2, Polyquaternium 17, Polyquaternium 18 und Polyquaternium 27 angegeben Polymere.

"Amphotere Polymere" im Sinne der vorliegenden Erfindung weisen neben einer positiv geladenen Gruppe in der Polymerkette weiterhin auch negativ geladenen Gruppen bzw. Monomereinheiten auf. Bei diesen Gruppen kann es sich z.B. um Carbonsäuren, Sulfonsäuren oder Phosphonsäuren handeln.

Bevorzugte einsetzbare amphotere Polymere stammen aus der Gruppe der Alkylacrylamid/Acrylsäure-Copolymere, der Alkylacrylamid/Methacrylsäure-Copolymere, der Alkylacrylamid/Methylmethacrylsäure-Copolymere, der Alkylacrylamid/Acrylsäure/Alkylaminoalkyl(meth)acrylsäure-Copolymere, der Alkylacrylamid/Methacrylsäure/Alkylaminoalkyl(meth)-acrylsäure-Copolymere, der Alkylacrylamid/Methylmethacrylsäure/Alkylaminoalkyl(meth)acrylsäure-Copolymere, der Alkylacrylamid/Alkymethacrylat/Alkylaminoethylmethacrylat/Alkylmethacrylat-Copolymere sowie der Copolymere aus ungesättigten Carbonsäuren, kationisch derivatisierten ungesättigten Carbonsäuren und gegebenenfalls weiteren ionischen oder nichtionogenen Monomeren.

Bevorzugt einsetzbare zwitterionische Polymere stammen aus der Gruppe der Acrylamidoalkyltrialkylammoniumchlorid/Acrylsäure-Copolymere sowie deren Alkali- und Ammoniumsalze, der Acrylamidoalkyltrialkylammoniumchlorid/Methacrylsäure-Copolymere sowie deren Alkali- und Ammoniumsalze und der Methacroylethylbetain/Methacrylat-Copolymere.

In einer besonders bevorzugten Ausführungsform der vorliegenden Erfindung liegen die Polymere in vorkonfektionierter Form vor. Zur Konfektionierung der Polymere eignet sich dabei u.a.
- die Verkapselung der Polymere mittels wasserlöslicher oder wasserdispergierbarer Beschichtungsmittel, vorzugsweise mittels wasserlöslicher oder wasserdispergierbarer natürlicher oder synthetischer Polymere;
- die Verkapselung der Polymere mittels wasserunlöslicher, schmelzbarer Beschichtungsmittel, vorzugsweise mittels wasserunlöslicher Beschichtungsmittel aus der Gruppe der Wachse oder Paraffine mit einem Schmelzpunkt oberhalb 30°C;
- die Cogranulation der Polymere mit inerten Trägermaterialien, vorzugsweise mit Trägermaterialien aus der Gruppe der wasch- oder reinigungsaktiven Substanzen, besonders bevorzugt aus der Gruppe der Builder (Gerüststoffe) oder Cobuilder.

Maschinelle Geschirrspülmittel enthalten die vorgenannten kationischen und/oder amphoteren Polymere vorzugsweise in Mengen zwischen 0,01 und 10 Gew.-%, jeweils bezogen auf das Gesamtgewicht des maschinellen Geschirrspülmittels. Bevorzugt werden im Rahmen der vorliegenden Anmeldung jedoch solche maschinelle Geschirrspülmittel, bei denen der Gewichtsanteil der kationischen und/oder amphoteren Polymere zwischen 0,01 und 8 Gew.-%, vorzugsweise zwischen 0,01 und 6 Gew.-%, bevorzugt zwischen 0,01 und 4 Gew.-%, besonders bevorzugt zwischen 0,01 und 2 Gew.-% und insbesondere zwischen 0,01 und 1 Gew.-%, jeweils bezogen auf das Gesamtgewicht des maschinellen Geschirrspülmittels, beträgt.

Die Bleichmittel sind eine mit besonderem Vorzug einsetzbare wasch- oder reinigungsaktive Substanz. Unter den als Bleichmittel dienenden, in Wasser H₂O₂ liefernden Verbindungen haben das Natriumpercarbonat, das Natriumperborattetrahydrat und das Natriumperboratmonohydrat besondere Bedeutung. Weitere brauchbare Bleichmittel sind beispielsweise Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure. Einsetzbar sind außerdem alle weiteren dem Fachmann aus dem Stand der Technik bekannten anorganischen oder organischen Peroxybleichmittel.

Als Bleichmittel können auch Chlor oder Brom freisetzende Substanzen eingesetzt werden. Unter den geeigneten Chlor oder Brom freisetzenden Materialien kommen beispielsweise heterozyklische N-Brom- und N-Chloramide, beispielsweise Trichlorisocyanursäure, Tribromisocyanursäure, Dibromisocyanursäure und/oder Dichlorisocyanursäure (DICA) und/oder deren Salze mit Kationen wie Kalium und Natrium in Betracht. Hydantoinverbindungen, wie 1,3-Dichlor-5,5-dimethylhydanthoin sind ebenfalls geeignet.

Erfindungsgemäß werden maschinelle Geschirrspülmittel bevorzugt, die 1 bis 35 Gew.-%, vorzugsweise 2,5 bis 30 Gew.-%, besonders bevorzugt 3,5 bis 20 Gew.-% und insbesondere 5 bis 15 Gew.-% Bleichmittel, vorzugsweise Natriumpercarbonat, enthalten.

Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Von allen dem Fachmann aus dem Stand der Technik bekannten Bleichaktivatoren werden mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS) besonders bevorzugt eingesetzt. Auch Kombinationen konventioneller Bleichaktivatoren können eingesetzt werden. Diese Bleichaktivatoren werden vorzugsweise in Mengen bis 10 Gew.-%, insbesondere 0,1 Gew.-% bis 8 Gew.-%, besonders 2 bis 8 Gew.-% und besonders bevorzugt 2 bis 6 Gew.-%, jeweils bezogen auf das Gesamtgewicht der bleichaktivatorhaltigen Mittel, eingesetzt.

Zur Steigerung der Wasch-, beziehungsweise Reinigungsleistung von maschinellen Geschirrspülmitteln sind auch Enzyme einsetzbar. Hierzu gehören insbesondere Proteasen, Amylasen, Lipasen, Hemicellulasen, Cellulasen, Perhydrolasen oder Oxidoreduktasen, sowie vorzugsweise deren Gemische. Diese Enzyme sind im Prinzip natürlichen Ursprungs; ausgehend von den natürlichen Molekülen stehen für den Einsatz in maschinellen Geschirrspülmitteln verbesserte Varianten zur Verfügung, die entsprechend bevorzugt eingesetzt werden können. Maschinelle Geschirrspülmittel enthalten Enzyme vorzugsweise in Gesamtmengen von 1 x 10⁻⁶ bis 5 Gew.-% bezogen auf aktives Protein. Die Proteinkonzentration kann mit Hilfe bekannter Methoden, zum Beispiel dem BCA-Verfahren oder dem Biuret-Verfahren bestimmt werden. Eingesetzt werden können aber auch enzymatische Systeme, umfassend eine Peroxidase und Wasserstoffperoxid beziehungsweise eine in Wasser Wasserstoffperoxid-liefernde Substanz. Der Zusatz einer Mediatorverbindung für die Peroxidase, zum Beispiel eines Acetosyringons, eines Phenolderivats oder eines Phenotiazins oder Phenoxazins, ist in diesem Fall bevorzugt, wobei noch zusätzlich oben genannte konventionelle polymere Farbübertragungsinhibitorwirkstoffe eingesetzt werden können.

Die Enzyme können in jeder nach dem Stand der Technik etablierten Form eingesetzt werden. Hierzu gehören beispielsweise die durch Granulation, Extrusion oder Lyophilisierung erhaltenen festen Präparationen oder, insbesondere bei flüssigen oder gelförmigen Mitteln, Lösungen der Enzyme, vorteilhafterweise möglichst konzentriert, wasserarm und/oder mit Stabilisatoren versetzt.

Alternativ können die Enzyme sowohl für die feste als auch für die flüssige Darreichungsform verkapselt werden, beispielsweise durch Sprühtrocknung oder Extrusion der Enzymlösung zusammen mit einem vorzugsweise natürlichen Polymer oder in Form von Kapseln, beispielsweise solchen, bei denen die Enzyme wie in einem erstarrten Gel eingeschlossen sind oder in solchen vom Kern-Schale-Typ, bei dem ein enzymhaltiger Kern mit einer Wasser-, Luft- und/oder Chemikalienundurchlässigen Schutzschicht überzogen ist. Bevorzugt können mehrere Enzyme und/oder Enzymzubereitungen, vorzugsweise Protease-Zubereitungen und Amylase-Zubereitungen, in Mengen von 0,1 bis 5 Gew.-%, vorzugsweise von 0,2 bis 4,5 Gew.-% und insbesondere von 0,4 bis 4 Gew.-%, jeweils bezogen auf das gesamte enzymhaltige Mittel, eingesetzt werden.

Glaskorrosionsinhibitoren verhindern das Auftreten von Trübungen, Schlieren und Kratzern aber auch das Irisieren der Glasoberfläche von maschinell gereinigten Gläsern. Bevorzugte Glaskorrosionsinhibitoren stammen aus der Gruppe der Magnesium- und Zinksalze sowie der Magnesium- und Zinkkomplexe. Im Rahmen der vorliegenden Erfindung beträgt der Gehalt an Zinksalz in maschinellen Geschirrspülmitteln vorzugsweise zwischen 0,1 bis 5 Gew.-%, bevorzugt zwischen 0,2 bis 4 Gew.-% und insbesondere zwischen 0,4 bis 3 Gew.-%, bzw. der Gehalt an Zink in oxidierter Form (berechnet als Zn²⁺) zwischen 0,01 bis 1 Gew.-%, vorzugsweise zwischen 0,02 bis 0,5 Gew.-% und insbesondere zwischen 0,04 bis 0,2 Gew.-%, jeweils bezogen auf das Gesamtgewicht des glaskorrosionsinhibitorhaltigen Mittels.

Um den Zerfall vorgefertigter Formkörper zu erleichtern, ist es möglich, Desintegrationshilfsmittel, sogenannte Tablettensprengmittel, in diese Mittel einzuarbeiten, um die Zerfallszeiten zu verkürzen. Unter Tablettensprengmitteln bzw. Zerfallsbeschleunigern werden Hilfsstoffe verstanden, die für den raschen Zerfall von Tabletten in Wasser oder anderen Medien und für die zügige Freisetzung der Wirkstoffe sorgen. Bevorzugt können Desintegrationshilfsmittel in Mengen von 0,5 bis 10 Gew.-%, vorzugsweise 3 bis 7 Gew.-% und insbesondere 4 bis 6 Gew.-%, jeweils bezogen auf das Gesamtgewicht des desintegrationshilfsmittelhaltigen Mittels, eingesetzt werden.

Als Parfümöle bzw. Duftstoffe können im Rahmen der vorliegenden Erfindung einzelne Riechstoffverbindungen, z.B. die synthetischen Produkte vom Typ der Ester, Ether, Aldehyde, Ketone, Alkohole und Kohlenwasserstoffe verwendet werden. Bevorzugt werden jedoch Mischungen verschiedener Riechstoffe verwendet, die gemeinsam eine ansprechende Duftnote erzeugen. Solche Parfümöle können auch natürliche Riechstoffgemische enthalten, wie sie aus pflanzlichen Quellen zugänglich sind, z.B. Pinien-, Citrus-, Jasmin-, Patchouly-, Rosen- oder Ylang-Ylang-Öl.

Die Konfektionierung maschineller Geschirrspülmittel kann in unterschiedlicher Wiese erfolgen. Die Mittel können in fester oder flüssiger sowie als Kombination fester und flüssiger Angebotsformen vorliegen. Als feste Angebotsformen eignen sich insbesondere Pulver, Granulate, Extrudate, Kompaktate, insbesondere Tabletten. Die flüssigen Angebotsformen auf Basis von Wasser und/oder organischen Lösungsmitteln können verdickt, in Form von Gelen vorliegen. Die Mittel können in Form einphasiger oder mehrphasiger Produkte konfektioniert werden. Bevorzugt werden insbesondere maschinelle Geschirrspülmittel mit einer, zwei, drei oder vier Phasen. Maschinelle Geschirrspülmittel, dadurch gekennzeichnet, dass es in Form einer vorgefertigten Dosiereinheit mit zwei oder mehr Phasen vorliegt, werden besonders bevorzugt. Die einzelnen Phasen mehrphasiger Mittel können die gleichen oder unterschiedliche Aggregatzustände aufweisen. Bevorzugt werden insbesondere maschinelle Geschirrspülmittel, die mindestens zwei unterschiedliche feste Phasen und/oder mindestens zwei flüssige Phasen und/oder mindestens eine feste und mindestens eine feste Phase aufweisen.

Maschinelle Geschirrspülmittel werden vorzugsweise zu Dosiereinheiten vorkonfektioniert. Diese Dosiereinheiten umfassen vorzugsweise die für einen Reinigungsgang notwendige Menge an wasch- oder reinigungsaktiven Substanzen. Bevorzugte Dosiereinheiten weisen ein Gewicht zwischen 12 und 30 g, bevorzugt zwischen 14 und 26 g und insbesondere zwischen 16 und 22 g auf. Um ein optimales Reinigungs- und Klarspülergebnis zu erzielen, werden solche maschinellen Geschirrspülmittel bevorzugt, die in Form einer vorgefertigten Dosiereinheit vorliegen und zwischen 0,001 und 1 g, vorzugsweise zwischen 0,01 und 0,1 g, besonders bevorzugt zwischen 0,01 und 0,07 g und insbesondere zwischen 0,01 und 0,05 g des Polymers a) bzw. zwischen 0,1 und 2,5 g, vorzugsweise zwischen 0,2 und 2,2 g, besonders bevorzugt zwischen 0,3 und 1,9 g und insbesondere zwischen 0,4 und 1,5 g nichtionische(s) Tensid(e) b) enthalten. Das Volumen der vorgenannten Dosiereinheiten sowie deren Raumform sind mit besonderem Vorzug so gewählt, dass eine Dosierbarkeit der vorkonfektionierten Einheiten über die Dosierkammer einer Geschirrspülmaschine gewährleistet ist. Das Volumen der Dosiereinheit beträgt daher bevorzugt zwischen 10 und 35 ml, vorzugsweise zwischen 12 und 30 ml.

Maschinelle Geschirrspülmittel, insbesondere die vorgefertigten Dosiereinheiten maschineller Geschirrspülmittel weisen mit besonderem Vorzug eine wasserlösliche Umhüllung auf.

Gegenstand der vorliegenden Anmeldung ist weiterhin ein Verfahren zur Verminderung der Verfärbung von Kunststoffgeschirr in einer Geschirrspülmaschine, wobei amphiphiles Blockcopolymer vom Typ -Aₙ-Bₘ- , wobei A den hydrophilen Monomerbaustein des hydrophilen Blocks Aₙ und B den hydrophoben Monomerbaustein des hydrophoben Blocks Bₘ darstellt, dadurch gekennzeichnet, dass als Monomer für den hydrophoben Monomerbaustein B ein Dien dient oder ein erfindungsgemäßes maschinelles Geschirrspülmittel, welches ein solches amphiphiles Blockcopolymer enthält, während des Durchlaufens eines Geschirrspülprogramms vor Beginn des Hauptspülgangs oder im Verlaufe des Hauptspülgangs in den Innenraum einer Geschirrspülmaschine eindosiert wird. Die Eindosierung bzw. der Eintrag des erfindungsgemäßen Mittels in den Innenraum der Geschirrspülmaschine kann manuell erfolgen; vorzugsweise wird das Mittel jedoch mittels der Dosierkammer in den Innenraum der Geschirrspülmaschine dosiert.

Eine typische Rahmenrezeptur für ein einsetzbares maschinelles Geschirrspülmittel, beispielsweise in Tablettenform, umfasst folgende Stoffe:

| | |
|---|---|
| Na-Tripolyphosphat | 20-50 Gew.-% |
| Natriumcarbonat | 10-30 Gew.-% |
| Natriumpercarbonat | 5-18 Gew.-% |
| Bleichaktivator | 0,5-5 Gew.-% |
| Bleichkatalysator | 0,01-1 Gew.-% |
| Sulfopolymer | 2,5-15 Gew.-% |
| Polycarboxylat | 0,1-10 Gew.-% |
| Niotensid | 0,5-10 Gew.-% |
| Phosphonate | 0,5-5 Gew.-% |
| Protease | 0,1-5 Gew.-% |
| Amylase | 0,1-5 Gew.-%, |

wobei sich die Gew.-% -Angabe jeweils auf das gesamte Mittel beziehen.
Statt des Na-Tripolyphosphats kann in der Rezeptur insbesondere auch 10-50 Gew.-% Citrat oder MGDA oder GLDA oder EDDS oder Mischungen aus zwei oder drei dieser Substanzen eingesetzt werden.

### Beispiele

### Beispiel 1: Herstellung von Polystyrolsulfonat mit einem Molekulargewicht von 20000 g/mol

60 g des Natriumsalzes von p-Styrolsulfonat wurden in einem Metallreaktor von Parr, der mit einem Magnetrührer versehen war, mit 1,03 g BlocBuilder MA® (Arkema), 0,04 g freiem SG1 Nitroxid (Arkema) und 200 ml Dimethylsulfoxid (DMSO) versetzt, 15 Minuten unter Argon entgast und anschließend unter einer Argon-Schutzatmosphäre gehalten. Die Polymerisation wurde für 3 Stunden bei 110 °C durchgeführt.

### Beispiel 2: Herstellung von Polystyrolsulfonat mit einem Molekulargewicht von 2000 g/mol

60 g des Natriumsalzes von p-Styrolsulfonat wurden in einem Metallreaktor von Parr, der mit einem Magnetrührer versehen war, mit 10,3 g BlocBuilder MA® (Arkema), 0,04 g freiem SG1 Nitroxid (Arkema) und 200 ml Dimethylsulfoxid (DMSO) versetzt, 15 Minuten unter Argon entgast und anschließend unter einer Argon-Schutzatmosphäre gehalten. Die Polymerisation wurde für 2 Stunden bei 110 °C durchgeführt.

### Beispiel 3: Herstellung von amphiphilem Copolymer A

60 g des gemäß Beispiel 1 hergestellten Polystyrolsulfonats wurden in einem Metallreaktor von Parr, der mit einem Magnetrührer versehen war, mit 12 ml 1,4-Isopren und 200 ml DMSO versetzt, 15 Minuten unter Argon entgast und anschließend unter einer Argon-Schutzatmosphäre gehalten. Die Copolymerisation wurde für 72 Stunden bei 120 °C durchgeführt. Das Copolymer wurde in Aceton ausgefällt, in Wasser wieder aufgelöst und erneut in Aceton ausgefällt, anschließend filtriert und mehrere Male mit Aceton gewaschen.
Die ¹H-NMR-Analyse ergab für das amphiphile Copolymer A einen Monomergehalt von 77 Mol-% Styrolsulfonat und 23 Mol-% Isopren.

### Beispiel 4: Herstellung von amphiphilem Copolymer B

60 g des gemäß Beispiel 1 hergestellten Polystyrolsulfonats wurden in einem Metallreaktor von Parr, der mit einem Magnetrührer versehen war, mit 7 ml 1,4-Isopren und 200 ml DMSO versetzt, 15 Minuten unter Argon entgast und anschließend unter einer Argon-Schutzatmosphäre gehalten. Die Copolymerisation wurde für 72 Stunden bei 120 °C durchgeführt. Das Copolymer wurde in Aceton ausgefällt, in Wasser wieder aufgelöst und erneut in Aceton ausgefällt, anschließend filtriert und mehrere Male mit Aceton gewaschen.

Die ¹H-NMR-Analyse ergab für das amphiphile Copolymer B einen Monomergehalt von 86 Mol-% Styrolsulfonat und 14 Mol-% Isopren.

### Beispiel 5: Herstellung von amphiphilem Copolymer C

60 g des gemäß Beispiel 2 hergestellten Polystyrolsulfonats wurden in einem Metallreaktor von Parr, der mit einem Magnetrührer versehen war, mit 12 ml 1,4-Isopren und 200 ml DMSO versetzt, 15 Minuten unter Argon entgast und anschließend unter einer Argon-Schutzatmosphäre gehalten. Die Copolymerisation wurde für 72 Stunden bei 120 °C durchgeführt. Das Copolymer wurde in Aceton ausgefällt, in Wasser wieder aufgelöst und erneut in Aceton ausgefällt, anschließend filtriert und mehrere Male mit Aceton gewaschen.
Die ¹H-NMR-Analyse ergab für das amphiphile Copolymer C einen Monomergehalt von 76 Mol-% Styrolsulfonat und 24 Mol-% Isopren.

### Beispiel 6: Herstellung von amphiphilem Copolymer D

60 g des gemäß Beispiel 2 hergestellten Polystyrolsulfonats wurden in einem Metallreaktor von Parr, der mit einem Magnetrührer versehen war, mit 7 ml 1,4-Isopren und 200 ml DMSO versetzt, 15 Minuten unter Argon entgast und anschließend unter einer Argon-Schutzatmosphäre gehalten. Die Copolymerisation wurde für 72 Stunden bei 120 °C durchgeführt. Das Copolymer wurde in Aceton ausgefällt, in Wasser wieder aufgelöst und erneut in Aceton ausgefällt, anschließend filtriert und mehrere Male mit Aceton gewaschen.
Die ¹H-NMR-Analyse ergab für das amphiphile Copolymer D einen Monomergehalt von 88 Mol-% Styrolsulfonat und 12 Mol-% Isopren.

### Beispiel 7: Inhibierung der Anfärbung von Kunststoff beim automatischen Geschirrspülen (Testanordnung)

0,73 g einer Schmutzmischung (Zusammensetzung siehe Tabelle 1) wurden mit 10 g Lupolen® PE-HD (Polyethylenkugeln, BASF) in 25 ml Wasser einer Härte von 21 ° dH zusammengegeben. Hinzu gegeben wurden 0,12 g (entsprechend 20 g auf 4 Liter) eines pulverförmigen maschinellen Geschirrspülmittels (Zusammensetzung siehe Tabelle 2) sowie 6,25 mg Mengen des jeweils zu untersuchenden Additivs. Die Mischung wurde 10 Minuten bei Raumtemperatur schnell gerührt und anschließend filtriert. Von dem Filtrat wurden 5 ml entnommen, mit 5 ml Toluol versetzt, 1 Minute geschüttelt und anschließend zentrifugiert, bis eine Phasenseparation auftrat. Mittels UV-VIS-Spektroskopie wurde 1 ml der Toluol-Phase untersucht und die Menge des Farbstoffs quantifiziert. Dabei wurde die Absorption des Hauptpeaks bei 484 nm zum Vergleich herangezogen. Zum Vergleich wurden auch die Extinktionen der reinen Schmutzmischung in Wasser, der Schmutzmischung mit den Polymerkugeln und der Schmutzmischung mit Polymerkugeln sowie dem maschinellen Geschirrspülmittel gemessen.

Höhere Farbstoff-Mengen in der Lösung bedeuten, dass weniger Farbstoff auf den Kunststoff (hier: die Polyethylenkugeln) aufgezogen ist.

Die unten angegeben Werte sind die Mittelwerte aus einer Dreifachbestimmung.

**Tabelle 1: Zusammensetzung der Schmutzmischung in Gew.-%**

| | |
|---|---|
| Olivenöl | 12,8 |
| Essig-Essenz | 4,2 |
| Tomatenketchup | 68,0 |
| Paprika-Gewürz | 3,2 |
| Curry-Gewürz | 3,2 |
| Kochsalz | 8,6 |

**Tabelle 2: Zusammensetzung des maschinellen Geschirrspülmittels in Gew.-%**

| | |
|---|---|
| Phosphat | 40,0 |
| Natriumcarbonat | 12,5 |
| Phosphonat | 2,5 |
| Sulfonsäuregruppen-haltiges Polymer | 8,0 |
| Polyacrylat | 8,5 |
| Nichtionische Tenside | 6,5 |
| Percarbonat | 15,5 |
| TAED | 2,5 |
| Bleichkatalysator | 1,0 |
| Amylase | 0,8 |
| Protease | 2,4 |
| Zinkacetat | 0,2 |
| Reste | ad 100 |

**Tabelle 3: Extinktionswerte bei 484 nm in 25 ml Wasser**

| | |
|---|---|
| 0,73 g Schmutz | 0,72 |
| 0,73 g + 10 g Lupolen® PE-HD | 0,1 |
| 0,73 g + 10 g Lupolen® PE-HD + 0,12 g Geschirrspülmittel | 0,2 |
| 0,73 g + 10 g Lupolen® PE-HD + 0,12 g Geschirrspülmittel + 6,25 mg Blockcopolymer A | 0,38 |
| 0,73 g + 10 g Lupolen® PE-HD + 0,12 g Geschirrspülmittel + 6,25 mg Blockcopolymer B | 0,35 |
| 0,73 g + 10 g Lupolen® PE-HD + 0,12 g Geschirrspülmittel + 6,25 mg Blockcopolymer C | 0,37 |
| 0,73 g + 10 g Lupolen® PE-HD + 0,12 g Geschirrspülmittel + 6,25 mg Blockcopolymer D | 0,37 |

Der Tabelle ist eindeutig zu entnehmen, dass die Verwendung der erfindungsgemäßen Blockcopolymeren zu einer deutlichen Verbesserung der Verfärbungsinhibierung führen.

### Beispiel 8: Inhibierung der Anfärbung von Kunststoff beim automatischen Geschirrspülen (Praxis-Test)

Polyethylen-Frühstücksbrettchen (PE-Brett) wurden einem maschinellen Geschirrspülverfahren (Geschirrspülmaschine AEG Proclean; Quick-Programm (55°C, 50 Minuten, Wasserhärte 21° dH) unterworfen. Als Ballastschmutz wurden 117,4 g der in Tabelle 1 angegebenen Schmutzzusammensetzung eingesetzt. Zum Reinigen der Frühstücksbrettchen wurden 20 g des in Tabelle 2 angegebenen pulverförmigen maschinellen Geschirrspülmittels sowie jeweils 1 g des zu untersuchenden Additivs dosiert. Vor und nach dem Spülen wurden mit Hilfe eines Farbmessgeräts (Datacolor DC 600-3) die Werte L, a und b gemessen. Aus diesen Werten wurde anschließend der ΔE-Wert ermittelt. Je niedriger der ermittelte ΔE-Wert, umso geringer ist die Anschmutzung der Brettchen. Die Ergebnisse sind in Tabelle 4 dargestellt. Je höher die Differenz zwischen den ΔE-Werten ist, desto deutlicher ist der Farbunterschied (siehe Tabelle 5).

**Tabelle 4: ΔE-Werte und ΔE-Wert-Differenz zu Basiswert**

| | ΔE | ΔE-Differenz |
|---|---|---|
| PE-Brett + Geschirrspülmittel (Basiswert) | 8,33 | |
| PE-Brett + Geschirrspülmittel + Blockcopolymer A | 6,47 | 1,83 |
| PE-Brett + Geschirrspülmittel + Blockcopolymer B | 6,60 | 1,73 |

Aus Tabelle 5 ist ersichtlich, dass sowohl mit amphiphilem Blockcopolymer A als auch mit amphiphilem Blockcopolymer B merkliche Farbunterschiede festgestellt wurden.

**Tabelle 5: Bewertung der ΔE-Wert-Differenz**

| ΔE-Differenz | Bewertung |
|---|---|
| 0,0 .... 0,5 | Kein bis fast kein Unterschied |
| 0,5 .... 1,0 | Unterschied für das geübte Auge sichtbar |
| 1,0 .... 2,0 | Merklicher Farbunterschied |
| 2,0 .... 4,0 | Wahrnehmbarer Farbunterschied |
| 4,0 .... 5,0 | Wesentlicher Farbunterschied |
| Größer 5,0 | Differenz wird als andere Farbe bewertet |

## Patentansprüche

1. Amphiphile Blockcopolymere vom Typ -Aₙ-Bₘ- , wobei A den hydrophilen Monomerbaustein des hydrophilen Blocks Aₙ und B den hydrophoben Monomerbaustein des hydrophoben Blocks Bₘ darstellt, **dadurch gekennzeichnet, dass** als hydrophiles Monomer Styrolsulfonat, Acrylsäure oder Derivate davon, (Meth)Acrylamid, beta-Carboxyethylacrylat, Vinylsulfonat, Sulfoethylmethyacrylat, Sulfopropylmethacrylat, Acrylamido-2-methylpropansulfonsäure, 3-Allyloxy-2-hydroxy-1-propansulfonsäure oder Mischungen aus diesen, insbesondere Styrolsulfonat enthält und als Monomer für den hydrophoben Monomerbaustein B ein Dien dient, insbesondere ein Dien oder mehrere Diene ausgewählt aus der Gruppe 1,3-Butadien, 1,3-Pentadien sowie Isopren.

2. Ausführungsform nach Anspruch 1, **dadurch gekennzeichnet, dass** der hydrophobe Block Bm eine oder mehrere der Strukturen ausgewählt aus 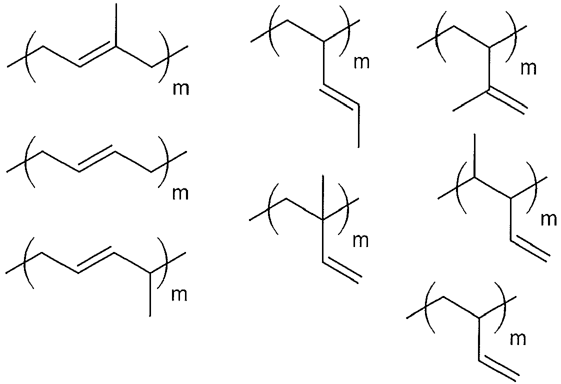 aufweist.

3. Ausführungsform nach einem der vorhergehenden Ansprüche, **dadurch gekennzeichnet, dass** der Gehalt an hydrophilem Monomer 50 bis 99 Mol-%, vorzugsweise 70 bis 90 Mol-% beträgt.

4. Ausführungsform nach einem der vorhergehenden Ansprüche, **dadurch gekennzeichnet, dass** sie ein Molgewicht von 1000 bis 80000 g/mol, vorzugsweise von 2000 bis 40000 g/mol aufweist.

5. Verwendung von amphiphilen Blockcopolymeren vom Typ -Aₙ-Bₘ- , wobei A den hydrophilen Monomerbaustein des hydrophilen Blocks Aₙ und B den hydrophoben Monomerbaustein des hydrophoben Blocks Bₘ darstellt, **dadurch gekennzeichnet, dass** als Monomer für den hydrophoben Monomerbaustein B ein Dien dient in maschinellen Geschirrspülmitteln, vorzugsweise in Mengen von 0,1 bis 25 Gew.-%.

6. Verwendung nach Anspruch 5 zur Verminderung der Verfärbung von Kunststoffgeschirr in maschinellen Geschirrspülmitteln, vorzugsweise in Mengen von 0,1 bis 10 Gew.-%, insbesondere von 1 bis 8 Gew.-% und besonders bevorzugt von 2 bis 6 Gew.-%.

7. Maschinelles Geschirrspülmittel, **dadurch gekennzeichnet, dass** es amphiphile Blockcopolymere vom Typ -Aₙ-Bₘ- , wobei A den hydrophilen Monomerbaustein des hydrophilen Blocks An und B den hydrophoben Monomerbaustein des hydrophoben Blocks Bₘ darstellt, **dadurch gekennzeichnet, dass** als Monomer für den hydrophoben Monomerbaustein B ein Dien dient, vorzugsweise in Mengen von 0,1 bis 10 Gew.-%, insbesondere von 1 bis 8 Gew.-% und besonders bevorzugt von 2 bis 6 Gew.-% enthält.

8. Maschinelles Geschirrspülverfahren zur Verminderung der Verfärbung von Kunststoffgeschirr, **dadurch gekennzeichnet, dass** amphiphiles Blockcopolymer vom Typ -Aₙ-Bₘ- , wobei A den hydrophilen Monomerbaustein des hydrophilen Blocks Aₙ und B den hydrophoben Monomerbaustein des hydrophoben Blocks Bₘ darstellt, **dadurch gekennzeichnet, dass** als Monomer für den hydrophoben Monomerbaustein B ein Dien dient oder ein maschinelles Geschirrspülmittel gemäß Anspruch 7 während des Durchlaufens eines Geschirrspülprogramms vor Beginn des Hauptspülgangs oder im Verlaufe des Hauptspülgangs in den Innenraum einer Geschirrspülmaschine eindosiert wird.

9. Ausführungsform nach einem der Ansprüche 5-8, **dadurch gekennzeichnet, dass** das amphiphile Blockcopolymer ein amphiphiles Blockcopolymer nach einem der Ansprüche 1-4 ist.

## Claims

1. Amphiphilic block copolymers of type -An-Bm-, A representing the hydrophilic monomer building block of the hydrophilic block An and B representing the hydrophobic monomer building block of the hydrophobic block Bm, **characterized in that** contains styrene sulfonate, acrylic acid or derivates thereof, (meth)acrylamide, beta-carboxyethyl acrylate, vinyl sulfonate, sulfoethyl methacrylate, sulfopropyl methacrylate, acrylamido-2-methylpropane sulfonic acid, 3-allyloxy-2-hydroxy-1-propane sulfonic acid or mixtures thereof, in particular styrene sulfonate, as the hydrophilic monomer and a diene is used as the monomer for the hydrophobic monomer building block B, in particular a diene selected from the group 1,3-butadiene, 1,3-pentadiene and isoprene.

2. The embodiment according to claim 1, **characterized in that** the hydrophobic block Bm comprises one or more structures selected from

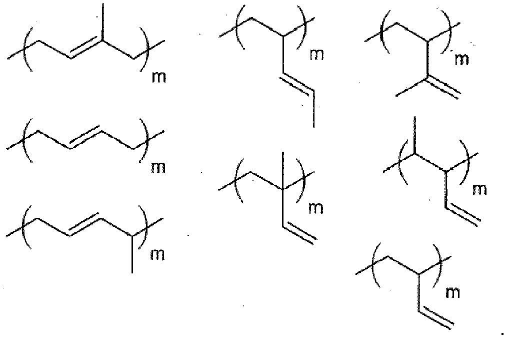

3. The embodiment according to one of the preceding claims, **characterized in that** the content of hydrophilic monomers is 50 to 99 mol.%, preferably 70 to 90 mol.%.

4. The embodiment according to one of the preceding claims, **characterized in that** it has a molecular weight of from 1,000 to 80,000 g/mol, preferably from 2,000 to 40,000 g/mol.

5. The use of amphiphilic block copolymers of type -An-Bm-, A representing the hydrophilic monomer building block of the hydrophilic block An and B representing the hydrophobic monomer building block of the hydrophobic block Bm, **characterized in that** a diene is used as the monomer for the hydrophobic building block B in automatic dishwasher detergents, preferably in quantities of from 0.1 to 25 wt.%.

6. The use according to claim 5 for minimizing the discoloration of plastics tableware in automatic dishwasher detergents, preferably in quantities of from 0.1 to 10 wt.%, in particular from 1 to 8 wt.% and particularly preferably from 2 to 6 wt.%.

7. An automatic dishwasher detergent, **characterized in that** it contains amphiphilic block copolymers of type -An-Bm-, A representing the hydrophilic monomer building block of the hydrophilic block An and B representing the hydrophobic monomer building block of the hydrophobic block Bm, **characterized in that** a diene is used as the monomer for the hydrophobic monomer building block B, preferably in quantities of from 0.1 to 10 wt.%, in particular from 1 to 8 wt.% and particularly preferably from 2 to 6 wt.%.

8. An automatic dishwashing method for minimizing the discoloration of plastics tableware, **characterized in that** an amphiphilic block copolymer of type -An-Bm-, A representing the hydrophilic monomer building block of the hydrophilic block An and B representing the hydrophobic monomer building block of the hydrophobic block Bm, **characterized in that** a diene is used as the monomer for the hydrophobic monomer building block B or an automatic dishwasher detergent according to claim 7 is dispensed into the internal space of a dishwasher while a dishwashing program is running, before the main washing cycle begins or during the main washing cycle.

9. The embodiment according to one of claims 5-8, **characterized in that** the amphiphilic block copolymer is an amphiphilic block copolymer according to one of claims 1-4.

## Revendications

1. Copolymères à blocs amphiphiles de type -Aₙ-Bₘ, A représentant le composant monomère hydrophile du bloc hydrophile Aₙ et B représentant le composant monomère hydrophobe du bloc hydrophobe Bₘ, **caractérisé en ce que** le monomère hydrophile contenu est le styrène sulfonate, l'acide acrylique ou ses dérivés, le (méth)acrylamide, l'acrylate de bêta-carboxyéthyle, le sulfonate de vinyle, le méthacrylate de sulfoéthyle, le méthacrylate de sulfopropyle, l'acide acrylamido-2-méthylpropanesulfonique, l'acide 3-allyloxy-2-hydroxy-1-propanesulfonique ou des mélanges de ceux-ci, en particulier le styrène sulfonate et le monomère pour le composant monomère hydrophobe B est un diène, en particulier un diène ou plusieurs diènes choisis dans le groupe comprenant le 1,3-butadiène, le 1,3-pentadiène et l'isoprène.

2. Mode de réalisation selon la revendication 1, **caractérisé en ce que** le bloc hydrophobe Bₘ comporte au moins une des structures choisies parmi

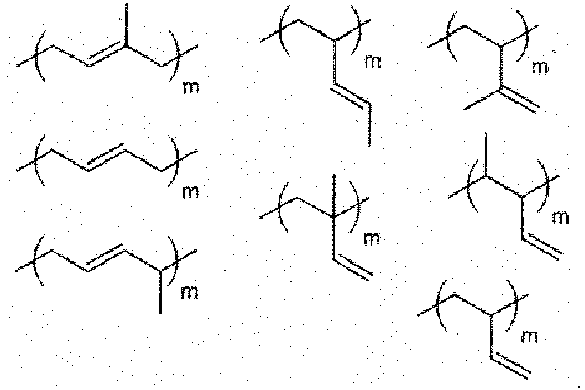

3. Mode de réalisation selon l'une des revendications précédentes, **caractérisé en ce que** la teneur en monomère hydrophile est de 50 à 99 % en moles, de préférence 70 à 90 % en moles.

4. Mode de réalisation selon l'une des revendications précédentes, **caractérisé en ce qu'**il a une masse moléculaire de 1000 à 80 000 g/mol, de préférence de 2000 à 40 000 g/mol.

5. Utilisation de copolymères à blocs amphiphiles de type -Aₙ-Bₘ-, A représentant le composant monomère hydrophile du bloc hydrophile Aₙ et B représentant le composant monomère hydrophobe du bloc hydrophobe Bₘ, **caractérisé en ce que** l'on utilise comme monomère destiné au composant monomère hydrophobe B un diène dans des agents de lavage de vaisselle en machine, de préférence dans des quantités de 0,1 à 25 % en poids.

6. Utilisation selon la revendication 5 pour réduire la décoloration de la vaisselle en matière plastique dans des agents de lavage de vaisselle en machine, de préférence dans des quantités de 0,1 à 10 % en poids, en particulier de 1 à 8 % en poids et de manière particulièrement préférée de 2 à 6 % en poids.

7. Agent de lavage de vaisselle en machine, **caractérisé en ce qu'**il contient des copolymères blocs amphiphiles de type -Aₙ-Bₘ, A représentant le composant monomère hydrophile du bloc hydrophile Aₙ et B représentant le composant monomère hydrophobe du bloc hydrophobe Bₘ, **caractérisé en ce que** l'on utilise comme monomère pour le composant monomère hydrophobe B un diène, de préférence dans des quantités de 0,1 à 10 % en poids, en particulier de 1 à 8 % en poids et de manière particulièrement préférée de 2 à 6 % en poids.

8. Procédé de lavage de vaisselle en machine pour réduire la décoloration de la vaisselle en matière plastique, **caractérisé en ce que** le copolymère à blocs amphiphile est de type -Aₙ-Bₘ-, A représentant le composant monomère hydrophile du bloc hydrophile Aₙ et B représentant le composant monomère hydrophobe du bloc hydrophobe Bₘ, **caractérisé en ce que** l'on utilise comme monomère pour le composant monomère hydrophobe B un diène ou **en ce qu'**un agent de lavage de vaisselle selon la revendication 7 est introduit de manière dosée dans l'espace intérieur d'une machine lave-vaisselle durant le déroulement d'un programme de lavage de vaisselle avant le début du lavage principal ou au cours du lavage principal.

9. Mode de réalisation selon l'une des revendications 5 à 8, **caractérisé en ce que** le copolymère à blocs amphiphile est un copolymère à blocs amphiphile selon l'une des revendications 1 à 4.
